# EUROPÄISCHE PATENTANMELDUNG

(11) **EP 4 261 295 A1**
(43) Veröffentlichungstag der Anmeldung: **18.10.2023**
(21) Anmeldenummer: 22167812.1
(22) Anmeldetag: 12.04.2022
(51) Int. Cl.: C21D 9/18, B23P 15/40, B26B 21/54, C21D 9/56, C21D 9/60, F27B 9/06, F27B 9/28, H05B 6/10

(54) **VERFAHREN ZUR HERSTELLUNG EINER KLINGE**

(71) Anmelder: "Credo" Stahlwarenfabrik Gustav Kracht GmbH & Co. KG, 42781 Haan (DE)
(72) Erfinder: Kracht, Fabian, 42653 Solingen (DE)
(74) Vertreter: Brinkmann, Stefan Ulrich

(57) **Zusammenfassung**

Die Erfindung betrifft ein Verfahren zum Herstellen einer Klinge, insbesondere einer Klinge für einen Hornhauthobel, einen Rasierhobel und/oder dergleichen Hobel, bei dem aus einem Stahlband (1) durch Stanzen ein Klingenrohband (3) hergestellt wird, wobei das Klingenrohband (3) eine Vielzahl von in Längsrichtung des Klingenrohbandes (3) hintereinander angeordneten Klingenabschnitten bereitstellt, bei dem das Klingenrohband (3) gehärtet wird, bei dem das gehärte Klingenrohband (5) entlang einer seiner beiden Längsseiten geschliffen wird und bei dem durch Vereinzelung der Klingenabschnitte Klingen (9) ausgebildet werden, wobei der Verfahrensschritt des Härtens mittels indirektem Induktionshärten durchgeführt wird.

## Beschreibung

Die Erfindung betrifft ein Verfahren zur Herstellung einer Klinge, insbesondere einer Klinge für einen Hornhauthobel, einen Rasierhobel und/oder dergleichen Hobel, bei dem aus einem Stahlband durch Stanzen ein Klingenrohband hergestellt wird, wobei das Klingenrohband eine Vielzahl von in Längsrichtung des Klingenrohbandes hintereinander angeordneten Klingenabschnitten bereitstellt, bei dem das Klingenrohband gehärtet wird, bei dem das gehärtete Klingenrohband entlang einer seiner beiden Längsseiten geschliffen wird und bei dem durch Vereinzelung der Klingenabschnitte Klingen ausgebildet werden.

Die Erfindung betrifft ferner eine Vorrichtung für das Härten eines aus Stahl gebildeten Klingenrohbandes, dass eine Vielzahl von in Längsrichtung des Klingenrohbandes hintereinander angeordneten Klingenabschnitten bereitstellt.

Ein gattungsgemäßes Verfahren sowie eine gattungsgemäße Vorrichtung sind aus dem Stand der Technik an sich gut bekannt, weshalb es eines gesonderten druckschriftlichen Nachweises an dieser Stelle nicht bedarf.

Gemäß eines ersten Verfahrensschritts eines gattungsgemäßen Verfahrens wird ein Stahlband aus einem typischen Klingenwerkstoff bereitgestellt, aus dem durch Stanzen ein Klingenrohband hergestellt wird. Durch den Verfahrensschritt des Stanzens entsteht ein Klingenrohband, das eine Vielzahl von in Längsrichtung des Klingenrohbandes hintereinander angeordnete Klingenabschnitte bereitstellt. Dabei repräsentiert ein jeder Klingenabschnitt eine im weiteren Verfahrensablauf entstehende Klinge.

Das Klingenrohband wird in einem darauffolgenden Bearbeitungsprozess gehärtet. Dabei dient das Härten dazu, dem Klingenrohband eine dem späteren Verwendungszweck einer Klinge entsprechende Härte zu verleihen.

In einem weiteren Bearbeitungsprozess wird das gehärtete Klingenrohband entlang einer seiner beiden Längsseiten geschliffen. Hierdurch werden die Schneiden der späteren Klingen ausgebildet.

Der Verfahrensschritt des Härtens erfolgt typischerweise mittels Einsatzhärten, zu welchem Zweck entsprechend vorbekannte Vorrichtungen zum Härten zum Einsatz kommen.

Obgleich sich vorbekannten Verfahren zur Klingenherstellung im alltäglichen Praxiseinsatz bewährt haben, besteht Verbesserungsbedarf, insbesondere mit Blick auf eine verbesserte Klingenqualität und dies bei gleichzeitiger Berücksichtigung umwelttechnischer Aspekte. Es ist deshalb die **Aufgabe** der Erfindung, ein Verfahren der gattungsgemäßen Art dahingehend weiterzuentwickeln, dass bei gleichzeitig verbesserter Umweltverträglichkeit höhere Klingenqualitäten hergestellt werden können. Zudem soll eine Vorrichtung zur Klingenhärtung vorgeschlagen werden.

Zur **Lösung** dieser Aufgabe wird verfahrensseitig ein Verfahren der eingangs genannten Art vorgeschlagen, dass sich dadurch auszeichnet, dass der Verfahrensschritt des Härtens mittels indirektem Induktionshärten durchgeführt wird.

Beim erfindungsgemäßen indirekten Induktionshärten wird ein Wärmeübertragungsmittel induktiv erwärmt, welches wiederum der Erwärmung des zu härtenden Klingenrohbandes dient. Diese erfindungsgemäße Vorgehensweise ermöglicht bei weniger Energieeinsatz als bei konventionellen Härtemethoden eine sehr viel präzisere und vor allem reproduzierbare Ausbildung der für den späteren Verwendungszweck einer Klinge entsprechenden Härte.

Das erfindungsgemäße Verfahren erweist sich zudem als kostengünstig und umweltfreundlich. Im Unterschied beispielsweise zum Flammhärten ist ein C0₂-Ausstoß vollends vermieden, womit die erfindungsgemäße Verfahrensdurchführung in vorteilhafter Weise CO₂-neutral ist. Die induktive Erwärmung des Wärmeübertragungsmittels erfolgt ausschließlich mittels Strom, so dass die Umweltfreundlichkeit des erfindungsgemäßen Verfahrens auch noch dadurch gesteigert werden kann, dass umweltfreundlich erzeugter Strom verwendet wird, insbesondere Strom aus regenerativen Energiequellen.

Das zu härtende Klingenrohband wird durch einen vom Wärmeübertragungsmittel bereitgestellten Härteraum hindurchgeführt. Infolge der induktiven Erwärmung des Wärmeübertragungsmittels erfolgt eine indirekte Induktivhärtung des Klingenrohbandes. Dabei erfolgt die Erwärmung des Wärmeübertragungsmittels durch Anlegen einer Wechselspannung an einen das Wärmeübertragungsmittel umgebenden Induktor. Diese elektrische Spannung induziert Wirbelströme im Wärmeübertragungsmittel, die das Wärmeübertragungsmittel durch seinen elektrischen Widerstand selektiv erhitzen. Die Eindringtiefe der Induktion ist dabei von der Frequenz der Wechselspannung abhängig, wobei die Hitze umso weniger tief in das Wärmeübertragungsmittel eindringt, je höher die Spannung frequentiert ist.

Der Erwärmungsgrad des Wärmeübertragungsmittels kann in einfacher Weise und präzise über die Stromstärke am Induktor beeinflusst werden. Im Ergebnis kann so über die Stromstärke und die anliegende Spannung eine gezielte Erwärmung des Wärmeübertragungsmittels vorgenommen werden. Im Ergebnis kann so schlussendlich auch gezielt Einfluss auf die Wärmezufuhr auf das zu härtende Klingenrohband genommen werden, was es gestattet, die wünschenswerterweise zu erreichende Härte des Klingenrohbandes gezielt einzustellen.

Die gezielte Wärmebehandlung mittels Wechselspannung ist im hohen Maße energieeffizient. Es ist insbesondere im Unterschied zu anderen Härteverfahren eine Energieeinsparung erreicht. Dabei erweist sich das indirekte Induktionshärten mit Bezug auf das Klingenrohband insbesondere deshalb als vorteilhaft, weil bei gleichzeitiger Energieeffizienz eine unbeabsichtigte Wellung des Klingenrohbandes vermieden ist. Dabei ist die Gefahr einer ungewollten Wellung des Klingenrohbandes dadurch gebannt, dass die vorrichtungsseitig vorgesehenen Induktoren nicht in direkter Wirkverbindung mit dem Klingenrohband stehen, sondern unter Zwischenordnung des Wärmeübertragungsmittels. Die hierdurch erreichte indirekte Induktionshärtung erbringt in schon vorbeschriebener Weise eine zielgerichtete und präzise Härtung einerseits, stellt andererseits aber auch sicher, dass unerwünschte Wellungen des Klingenrohbandes vermieden sind, wie diese aufträten, wenn im Klingenrohband selbst Wirbelströme induziert würden. Trotz eines vergleichsweise dünnen Klingenrohbandes von zum Beispiel 0,05 mm bis 1,0 mm kann so ein gezielter Härteprozess durch induktive Erwärmung des Wärmeübertragungsmittels erreicht werden.

Im Ergebnis kann so bei gleichzeitiger Umweltfreundlichkeit eine wunschgemäß hohe Klingenqualität in besonders betriebswirtschaftlicher Weise erreicht werden.

Gemäß einem weiteren Merkmal der Erfindung ist vorgesehen, dass ein Stahlband mit einer Dicke von 0,05 mm bis 1,0 mm, vorzugsweise von 0,1 mm bis 0,5 mm verwendet wird. Bei einem solch vergleichsweise dünnen Stahlband führt ein direktes Induktionshärten in nachteiliger Weise dazu, dass es im Zuge der Härtung zu einer Wellung des Stahlbandes kommt, 'womit dieses bzw. hieraus im Weiteren hergestellte Klingen nicht mehr brauchbar sind. Die erfindungsgemäße Ausgestaltung schafft hierbei insofern Abhilfe, als dass ein indirektes Induktionshärten durchgeführt wird.

Es können mithin wunschgemäß dünne Klingen ausgebildet werden, und dies auch mit einer für einen späteren bestimmungsgemäßen Verwendungsfall entsprechenden Härte. Dabei findet bei entsprechender Anwendung des erfindungsgemäßen Verfahrens eine Durchhärtung des Stahlbandes statt, wobei eine Härtung von 63 bis 67 Rockwell, vorzugsweise 65 Rockwell erreicht wird. Eine Rockwell-Härte über 67 ist nicht erwünscht, da das Stahlband nach einer Härtung zur Vereinzelung der Klingen gebrochen wird. Bei einer Rockwell-Härte von über 67 würde das Stahlband nicht nur an den dafür vorgesehenen Stellen, sondern auch unkalkulierbar an anderen Stellen durchbrechen. Eine Vereinzelung der Klingen wäre dann nicht mehr ohne weiteres möglich.

Gemäß einem weiteren Merkmal der Erfindung ist vorgesehen, dass das Klingenrohband mit jeweils durch eine Sollbruchstelle voneinander separierten Klingenabschnitten verwendet wird. Die Sollbruchstellen vereinfachen im weiteren Herstellverfahren die Vereinzelung der Klingen durch Brechen. Dabei darf die durch Härtung erreichte Rockwell-Härte nicht über 67 liegen, wie bereits schon vorstehend ausgeführt.

Gemäß einem weiteren Merkmal der Erfindung ist vorgesehen, dass das gehärtete Klingenrohband entlang seiner beiden Längsseiten geschliffen wird. Demnach findet nicht nur eine einseitige Schneidenausgestaltung statt, sondern vielmehr eine Schneidenausbildung auf beiden Seiten der späteren Klinge. Dies ermöglicht es im späteren Verwendungsfall, die Klinge umdrehen zu können, womit sie eine verdoppelte Lebensdauer im Vergleich zur Ausbildung nur einer Schneide erreicht ist.

Gemäß einem weiteren Merkmal der Erfindung ist vorgesehen, dass die Vereinzelung der Klingenabschnitt durch Brechen des gehärteten Klingenrohbandes erfolgt. In denkbar einfacher und wirtschaftlicher Weise werden so eine Vereinzelung der einzelnen Klingenabschnitte und damit auch eine vereinfachte Ausbildung der Klingen erreicht.

Gemäß einem weiteren Merkmal der Erfindung ist vorgesehen, dass der Verfahrensschritt des Härtens durchgeführt wird, indem das Klingenrohband durch einen von einem Wärmeübertragungsmittel bereitgestellten Härteraum hindurchgeführt wird, wobei das Wärmeübertragungsmittel induktiv erwärmt wird.

Das erfindungsgemäß zum Einsatz kommende Wärmeübertragungsmittel stellt einen Härteraum bereit. Durch diesen Härteraum hindurch wird das Klingenrohband geführt, vorzugsweise kontinuierlich.

Das Wärmeübertragungsmittel selbst wird induktiv erwärmt. Zu diesem Zweck ist ein Induktor vorgesehen, der das Wärmeübertragungsmittel zumindest teilweise umgibt. Durch Anlegen einer Wechselspannung an den Induktor werden Wirbelströme im Wärmeübertragungsmittel erzeugt, die zu einer partiellen Erwärmung des Wärmeübertragungsmittels führen. Die so erzeugte Wärme wird durch Konvektion und Strahlung an das durch den vom Wärmeübertragungsmittel umgebenden Härteraum hindurchgeführte Klingenrohband übergeben, was zu einer Erwärmung desselben führt. Dabei kann eine gezielte Erwärmung des Klingenrohbandes durch die gezielt mögliche Erwärmung des Wärmeübertragungsmittels erreicht werden. Es ist in diesem Zusammenhang bevorzugt, das Wärmeübertragungsmittel auf eine Temperatur von 750°C bis 950°C zu erwärmen. Infolgedessen stellt sich in Bezug auf das Klingenrohband eine Temperatur zwischen 750°C und 800°C ein. Auch höhere Temperaturen sind natürlich möglich, wobei die vorgenannten Temperaturen zur Erzielung der gewünschten Rockwell-Härte bevorzugt sind.

Gemäß einem weiteren Merkmal der Erfindung ist vorgesehen, dass der Härteraum mit Stickstoff geflutet wird. Verzunderungen an der Oberfläche des Klingenrohbandes sind so in vorteilhafter Weise vermieden, ebenso wie mit Verzunderungserscheinungen einhergehende Oberflächenverfärbungen des Klingenrohbandes.

Als Stickstoff kommt bevorzugterweise dem Grunde nach reiner Stickstoff zum Einsatz, das heißt Stickstoff mit einem Reinheitsgrad von 99,9%.

Gemäß einem weiteren Merkmal der Erfindung ist vorgesehen, dass der Verfahrensschritt des Härtens ferner vorsieht, dass dem Erwärmen unmittelbar nachfolgend ein Abkühlen des Klingenrohbandes durchgeführt wird. Durch ein abruptes Abkühlen findet in Kombination mit der vorangegangenen Erwärmung das eigentliche Härten statt.

Dabei ist es gemäß einem weiteren Merkmal der Erfindung vorgesehen, dass dem Verfahrensschritt des Abkühlens unmittelbar nachfolgend ein Anlassen des gehärteten Klingenrohbandes durchgeführt wird. Auch das Anlassen erfolgt durch ein indirektes Erwärmen durch Induktion. Mit Vorteil wird hierdurch in schon vorbeschriebener Weise eine Wellung des Klingenrohbandes vermieden.

Gemäß einem weiteren Merkmal der Erfindung ist vorgesehen, dass als Wärmeübertragungsmittel ein Rohr, vorzugsweise ein Edelstahlrohr verwendet wird. Die Verwendung eines Edelstahlrohrs ist insbesondere aus Gründen einer homogenen Wärmeverteilung und einer verminderten Korrosionsanfälligkeit bevorzugt. Dabei ist es ferner bevorzugt, ein Edelstahlrohr mit einem von der Kreisform abweichenden Querschnitt einzusetzen. Hierdurch ist ein an die Ausgestaltung eines Klingenrohbandes angepasste Rohrausgestaltung gegeben, was zu einer besonders guten Temperaturgleichverteilung innerhalb des Klingenrohbandes führt.

Gemäß einem weiteren Merkmal der Erfindung ist vorgesehen, dass der Verfahrensschritt des Kühlens durchgeführt wird, indem das gehärtete Klingenrohband durch einen zwischen beabstandet zueinander angeordneten Kühleinrichtungen ausgebildeten Spaltraum hindurchgeführt wird, wobei die Kühleinrichtungen jeweils klingenrohbandseitig eine mit Riefen aufweisende Kontaktoberfläche bereitstellen, an denen das Klingenrohband unter jeweiliger Ausbildung eines Berührungskontakts vorbeigeführt wird.

Zwecks Kühlung des Klingenrohbandes kommen zwei Kühleinrichtungen zum Einsatz. Diese sind unter Ausbildung eines Spaltraums beabstandet zueinander angeordnet. Zwecks Kühlung wird das Klingenrohband durch diesen Spaltraum hindurchgeführt. Dabei liegen die Kühleinrichtungen mit ihrer jeweiligen dem Klingenrohband zugewandten Seite am Klingenrohband an. Dies bewirkt einen effektiven Wärmeeintrag vom Klingenrohband in die jeweiligen Kühleinrichtungen, was zu einer schnellen Abkühlung des Klingenrohbandes führt. Dabei sind die mit dem Klingenrohband in Kontakt tretenden Kontaktoberflächen der Kühleinrichtungen mit Riefen ausgebildet, alternativ mit Rillen, Nuten, Rippen und/oder dergleichen. Von entscheidender Bedeutung ist, dass durch die Riefenausgestaltung eine von der glatten Ausgestaltung abweichende Oberflächenausgestaltung gegeben ist. Hierdurch erfolgt eine Glättung und auch gleichzeitige Reinigung der den Kühleinrichtungen zugewandten Oberseiten des Klingenrohbandes. Der so bewirkte Abstreifeffekt macht eine nachträgliche Oberflächenglättung und/oder -säuberung überflüssig.

Gemäß einem weiteren Merkmal der Erfindung ist vorgesehen, dass der Verfahrensschritt des Härtens kontinuierlich durchgeführt wird. Es ist so eine einfache Integration des Verfahrensschritts des Härtens in den gesamten Herstellprozess ermöglicht. Ferner ist eine gleichbleibende Klingenqualität gewährleistet.

Es ist in dem Zusammenhang bevorzugt, das zu härtende Klingenrohband auf einer Abwickelhaspel bereitzustellen. Von dieser wird das Klingenrohband abgewickelt und dem Härteprozess einschließlich nachfolgendem Anlassen zugeführt. Am Ende der Bearbeitungsstrecke ist eine Aufwickelhaspel vorgesehen, auf die das gehärtete und angelassene Klingenrohband aufgewickelt wird.

Mit der Erfindung wird zur **Lösung** der vorstehenden Aufgabe ferner vorgeschlagen eine Vorrichtung für das Härten eines aus Stahl gebildeten Klingenrohbandes, das eine Vielzahl von in Längsrichtung des Klingenbandes hintereinander angeordneten Klingenabschnitten bereitstellt, mit einer Heizstrecke, die ein Wärmeübertragungsmittel aufweist, das einen Härteraum zum kontinuierlichen Hindurchführen des Klingenrohbandes aufweist, wobei die Heizstrecke ferner einen das Wärmeübertragungsmittel zumindest teilweise umgebenden Induktor zur induktiven Erwärmung des Wärmeübertragungsmittels aufweist.

Die erfindungsgemäße Vorrichtung verfügt über eine Heizstrecke. Diese Heizstrecke dient schlussendlich dazu, das zu härtende Klingenrohband zu erwärmen, und zwar vorzugsweise auf eine Temperatur zwischen 770°C und 950°C.

Die Heizstrecke verfügt zu diesem Zweck über ein Wärmeübertragungsmittel. Dieses Wärmeübertragungsmittel stellt seinerseits einen Härteraum bereit, durch den das zu härtende Klingenrohband hindurchgeführt wird, und zwar kontinuierlich.

Die Heizstrecke verfügt des Weiteren über einen Induktor, der das Wärmeübertragungsmittel zumindest teilweise umgibt. Mittels dieses Induktors kann eine induktive Erwärmung des Wärmeübertragungsmittels stattfinden, indem an den Induktor eine Wechselspannung angelegt wird. Diese Wechselspannung sorgt dann für die Erzeugung von Wirbelströmen innerhalb des Wärmeübertragungsmittels, wodurch es zu einer partiellen Aufheizung desselben kommt. Über die Stromstärke und die Frequenz der angelegten Wechselspannung kann die Erwärmung des Wärmeübertragungsmittels gezielt und sehr präzise eingestellt werden.

Die erfindungsgemäße Vorrichtung erlaubt in vorteilhafter Weise eine indirekte induktive Erwärmung des Klingenrohbandes. Hierdurch werden im Wesentlichen zwei Vorteile erzielt. Zum einen kann über die induktive Erwärmung des Wärmeübertragungsmittels eine sehr gezielte Temperatureinstellung hinsichtlich des Wärmeübertragungsmittels und damit auch des Klingenrohbandes eingestellt werden. Dabei besteht zum anderen in vorteilhafter Weise für das Klingenrohband nicht die Gefahr, dass es zu ungewollten Wellenbildungen kommt, wie diese bei einer direkten induktiven Erwärmung des Klingenrohbandes auftreten können. Des Weiteren ergeben sich die schon vorstehend anhand des erfindungsgemäßen Verfahrens erzielten Vorteile.

Gemäß einem weiteren Merkmal der Erfindung ist die Vorrichtung durch eine Kühlstrecke gekennzeichnet, die zwei taschenförmig ausgebildete Kühleinrichtungen aufweist, die unter Ausbildung eines Spaltraums zum kontinuierlichen Durchführen eines Klingenrohbandes beabstandet zueinander angeordnete sind. Diese Kühleinrichtungen werden mit einem Kühlmittel, beispielsweise Wasser versorgt. Dieses stammt aus einem Kühlmittelreservoir und wird vorzugsweise in einem geschlossenen Strömungskreislauf durch die beiden Kühleinrichtungen geführt. Hierdurch ist eine permanent dauerhafte Abkühlung der Kühleinrichtungen gewährleistet.

Die Kühleinrichtungen selbst stehen vorzugsweise in Kontakt mit dem abzukühlenden Klingenrohband. Dieses wird zu diesem Zweck durch einen Spaltraum hindurchgeführt, der dadurch ausgebildet ist, dass die beiden Kühlreinrichtungen beabstandet zueinander angeordnet sind. Diese Ausbildung gestattet es, dass ein abrupter Wärmeabfluss aus dem Klingenrohband in die Kühleinrichtungen stattfinden kann, was eine rasche Kühlwirkung zum Vorteil hat.

Gemäß einem weiteren Merkmal der Erfindung ist vorgesehen, dass die Kühleinrichtungen jeweils klingenrohbandseitig eine mit Riefen ausgerüstete Kontaktoberfläche aufweisen. Hierdurch wird in vorteilhafter Weise ein Abriebeffekt erzielt, der dadurch entsteht, dass das kontinuierlich durch den Spaltraum hindurchgeführte Klingenrohband in Berührungskontakt mit den Kühleinrichtungen steht. Dieser Abriebeffekt sorgt für eine Säuberung und Glättung der den Kühleinrichtungen zugewandten Großseiten des Klingenrohbandes.

Gemäß einem weiteren Merkmal der Erfindung ist vorgesehen, dass die Riefen rautenförmig angeordnet sind. Hierdurch wird ein besonders effektiver Abrieb- bzw. Abstreifeffekt erzielt.

Gemäß einem weiteren Merkmal der Erfindung ist eine Anlassstrecke vorgesehen, die ein Wärmeübertragungsmittel aufweist, dass einen Anlassraum zum kontinuierlichen Hindurchführen des Klingenrohbandes aufweist, wobei die Anlassstrecke ferner einen das Wärmeübertragungsmittel zumindest teilweise umgebenen Induktor zur induktiven Erwärmung des Wärmeübertragungsmittels aufweist. Mit einer solchen Anlassstrecke werden die schon vorbeschriebenen Heizstrecke erzielten Vorteile erreicht. Dabei ist im Unterschied zur Heizstrecke bei der Anlassstrecke vorgesehen, dass im Zuge einer bestimmungsgemäßen Verwendung eine Anlasstemperatur von zum Beispiel 200°C bis 300°C erreicht wird. Der Aufbau von Anlasstrecke und Heizstrecke kann aber im Übrigen gleich gewählt werden.

Gemäß einem weiteren Merkmal der Erfindung ist vorgesehen, dass der Heizstrecke eine weitere Heizstrecke in Hindurchführungsrichtung des Klingenrohbandes vorgeschaltet ist. Es können auch noch weitere Heizstrecken vorgesehen sein. Von Bedeutung ist allein, dass die Heizstrecke bzw. die Mehrzahl von Heizstrecken in Förderrichtung des Klingenrohbandes eine Länge aufweisen, die ausreichend ist, um die gewünschte Härtetemperatur zu erreichen. Bevorzugterweise weist die Induktionsstrecke eine Länge von 3 m bis 6 m auf, wobei bei der Verwendung mehrerer Heizstrecken die Heizstrecken vorzugsweise gleich lang ausgebildet sind. So können beispielsweise drei Heizstrecken zu je 1,5 m verwendet werden, was zu einer Gesamtlänge der Induktionsstecke von 4,5 m führt.

Gemäß einem weiteren Merkmal der Erfindung ist vorgesehen, dass das Wärmeübertragungsmittel ein Edelstahlrohr ist. Diese weist aus den schon vorerläuterten Gründen vorteilhafter Weise einen von der Kreisform abweichenden Querschnitt auf.

Gemäß einem weiteren Merkmal der Erfindung ist der Härteraum an eine Stickstoffquelle strömungstechnisch angeschlossen. Bei dieser Stickstoffquelle kann es sich um ein Stickstoffreservoir und/oder eine Erzeugungseinheit für Stickstoff handeln. Dabei wird der Stickstoff im bestimmungsgemäßen Verwendungsfall in den Härteraum eingeführt, so dass die im Härteraum ansonsten vorhandene Umgebungsluft verdrängt wird. Verzunderungen an der Oberfläche des Klingenrohbandes können so in vorteilhafter Weise vermieden werden.

Gemäß einem weiteren Merkmal der Erfindung ist vorgesehen, dass die Edelstahlrohre der Heizstrecken unter Ausbildung eines zusammenhängenden Härteraums mit Hilfe einer Muffe miteinander verbunden sind. Das ungewollte Austreten von Stickstoff bzw. das ungewollte Eintreten von Umgebungsluft über die Schnittstelle zwischen zwei benachbarten Edelstahlrohren ist so vermieden.

Gemäß einem weiteren Merkmal der Erfindung sind aufgabenseitig eine Aufwickelhaspel für das Klingenrohband und abgabeseitig eine Aufwickelhaspel für das gehärtete Klingenrohband vorgesehen. Es ist so in vorteilhafter Weise eine kontinuierliche Verfahrensdurchführung möglich, indem aufgabenseitig das Klingenrohband kontinuierlich abgewickelt und durch die aus Induktionsstrecke und Kühlstrecke gebildete Härtestrecke und alsdann durch die Anlassstrecke geführt wird, wobei das gehärtete Klingenrohband nach einem Verlassen der Anlassstrecke abgabenseitig auf die Aufwickelhaspel aufgewickelt wird. Die Aufwickelhaspel kann dann samt dem davon ausgenommenen gehärteten Klingenrohband einem weiteren Bearbeitungsprozess zugeführt werden. Im Ergebnis ist so eine logistisch einfache Verfahrensabwicklung ermöglicht.

Weitere Merkmale und Vorteile der Erfindung ergeben sich aus der nachfolgenden Beschreibung anhand der Figuren. Dabei zeigen
- Fig. 1: in schematischer Ablaufdarstellung das erfindungsgemäße Verfahren sowie
- Fig. 2: in schematischer Darstellung eine erfindungsgemäße Vorrichtung.

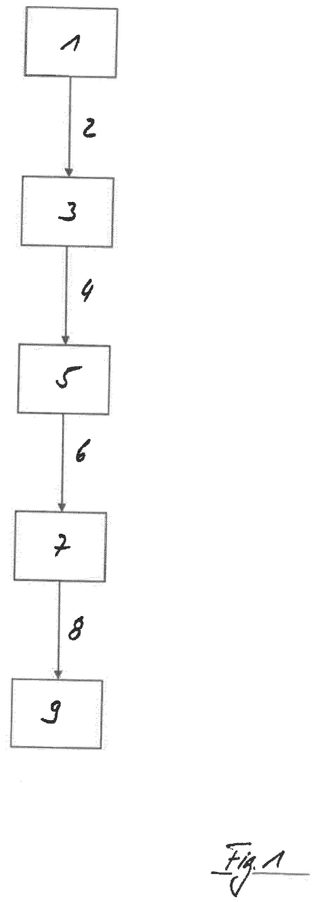

Fig. 1 lässt in einem schematischen Ablaufdiagramm die erfindungsgemäße Verfahrensdurchführung zur Herstellung einer Klinge erkennen.

Der Ausgangspunkt der erfindungsgemäßen Verfahrensdurchführung ist ein Stahlband 1, das aus einem klingengeeigneten Stahlmaterial gebildet ist. Das Stahlband 1 wird beispielsweise auf eine Haspel aufgewickelt bereitgestellt.

Das Stahlband 1 wird einem ersten Bearbeitungsprozess 2 zugeführt. Der erste Bearbeitungsprozess 2 umfasst insbesondere ein Stanzen des Stahlbandes, infolgedessen ein Klingenrohband 3 hergestellt wird.

Mittels Stanzens wird das Stahlband 1 in einzelne, aber noch zusammenhängende Klingenabschnitte unterteilt, wobei ein jeder Klingenabschnitt eine spätere Klinge 9 repräsentiert. Durch das Stanzen wird je Klingenabschnitt die spätere Klingenkontur ausgebildet. Zudem werden als Sollbruchstellen dienende Einprägungen zwischen zwei benachbarte Klingenabschnitte eingebracht. Im Ergebnis dieser Verfahrensdurchführung steht ein Klingenband mit einer Vielzahl von in Längsrichtung des Klingenrohbandes hintereinander angeordneten Klingenabschnitten.

Das Stahlband weist vorzugsweise eine Dicke von 0,05 mm bis 1,0 mm, noch mehr bevorzugt von 0,1 mm bis 0,55 mm auf.

Das Klingenrohband 3 wird in einem weiteren Bearbeitungsprozess 4 unter anderem einer Härtung unterzogen, so dass im Ergebnis des zweiten Bearbeitungsprozesses 4 ein gehärtetes Klingenrohband 5 steht.

Die im Zuge des zweiten Bearbeitungsprozesses 4 durchgeführte Härtung umfasst eine Wärmebehandlung einerseits gefolgt von einer Abkühlung andererseits. Der Abkühlung kann als weiterer Verfahrensschritt ein Anlassen nachfolgen. In diesem Fall beinhaltet der zweite Bearbeitungsprozess 4 eine Wärmebehandlung, eine Kühlbehandlung sowie eine Anlassbehandlung.

Die Wärmebehandlung des Klingenrohbandes wird erfindungsgemäß mittels einer indirekten induktiven Erwärmung durchgeführt, womit der Verfahrensschritt des Härtens insgesamt als indirektes Induktionshärten bezeichnet werden kann.

Zum Zwecke der indirekten induktiven Erwärmung ist ein Wärmeübertragungsmittel vorgesehen, das einen Härteraum - auch Härtekammer genannt - bereitstellt. Durch diesen Härteraum hindurch wird das Klingenrohband 3 geführt. Es erfolgt eine induktive Erwärmung des Wärmeübertragungsmittels, welches wiederum das Klingenrohband 3 erwärmt. Die Wärmeübertragung vom Wärmeübertragungsmittel auf das Klingenrohband 3 erfolgt sowohl durch Strahlung als auch konvektiv. Im Ergebnis wird das Klingenrohband 3 indirekt induktiv erwärmt.

Der Erwärmung des Klingenrohbandes 3 folgt eine rasche Abkühlung nach. Damit ergibt sich insgesamt ein gehärtetes Klingenrohband 5, das nach einem Anlassen als Ergebnis des zweiten Behandlungsprozesses 4 steht.

Die Erwärmung des Wärmeübertragungsmittels erfolgt auf eine Temperatur von 770°C bis 950°C. Infolgedessen ergibt sich eine Erwärmung des Klingenrohbandes 3 auf eine Temperatur von vorzugsweise 800°C. Andere Temperatureinstellungen sind natürlich möglich.

Während der Anlassbearbeitung erfolgt eine erneute Erwärmung des dann schon gehärteten Klingenrohbandes 5 auf eine Temperatur zwischen 200°C und 300°C. Auch diese Erwärmung während der Anlassbehandlung erfolgt vorzugsweise indirekt induktiv. Dies ebenfalls dadurch, dass ein Wärmeübertragungsmittel vorgesehen ist, durch das hindurch das gehärtete Klingenrohband 5 geführt wird. Dabei wird das Wärmeübertragungsmittel induktiv erwärmt.

Es folgt alsdann ein dritter Behandlungsprozess 6. Dieser Behandlungsprozess 6 kann insbesondere ein Beschriften, ein Lackieren sowie ein Schleifen des gehärteten Klingenrohbandes 5 umfassen. Im Ergebnis dieses Behandlungsprozesses 6 steht ein fertig ausgebildetes Klingenband 7.

Das Klingenband 7 wird in einem vierten und letzten Bearbeitungsprozess 8 endfertig verarbeitet, indem eine Vereinzelung der einzelnen Klingenabschnitte durch Brechen erfolgt, infolge dessen einzelne Klingen 9 ausgebildet werden.

Im Ergebnis der gesamten Verfahrensdurchführung steht eine gehärtete, beschriftete, lackierte und schlussendlich geschliffene Klinge 9.

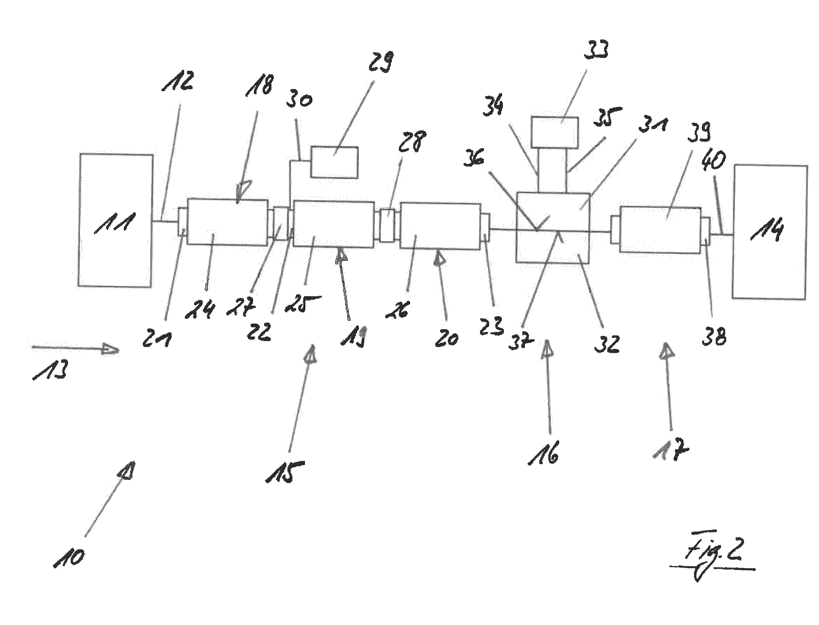

Fig. 2 lässt in schematischer Darstellung eine erfindungsgemäße Vorrichtung 10 für das Härten eines aus Stahl gebildeten Klingenrohbandes 12 erkennen.

Das Klingenrohband 12 wird der Vorrichtung 10 mittels einer Abwickelhaspel 11 bereitgestellt. Die Abwickelhaspel 11 ist mithin aufgabeseitig der Vorrichtung 10 angeordnet. Im Zuge einer bestimmungsgemäßen Verfahrensdurchführung wird das Klingenrohband 12 von der Abwickelhaspel 11 abgewickelt und in Förderrichtung 13 bis zur Aufwickelhaspel 14 geführt. Im Ergebnis der Härtung steht ein gehärtetes Klingenrohband 40, das auf die Aufwickelhaspel 14 abgabeseitig der Vorrichtung 10 aufgewickelt wird. Die mit dem gehärteten Klingenband 40 bestückte Aufwickelhaspel 14 kann dann weiteren Bearbeitungsschritten unterzogen werden, beispielsweise den schon anhand von Fig. 1 erläuterten Bearbeitungsprozessen 6 und 8.

Die Vorrichtung 10 verfügt zwecks Erwärmung des Klingenrohbandes 12 über eine Erwärmungsstrecke - auch Induktionsstrecke 15 genannt - und über eine Kühlstrecke 16. Diese beiden Strecken bilden zusammen die sogenannte Härtestrecke aus.

Der Kühlstrecke 16 folgt in Förderrichtung 13 eine Anlassstrecke 17 nach.

Im gezeigten Ausführungsbeispiel verfügt die Induktionsstrecke 15 über insgesamt drei Heizstrecken, nämlich eine erste Heizstrecke 18, eine zweite Heizstrecke 19 sowie eine dritte Heizstrecke 20.

Eine jede Heizstrecke 18, 19 bzw. 20 verfügt über ein Edelstahlrohr 21, 22 bzw. 23 als Wärmeübertragungsmittel. Dabei stellt jedes Edelstahlrohr 21, 22 bzw. 23 einen Härteraum zur Verfügung, der auch als Härtekammer bezeichnet werden kann. Bevorzugterweise ist jedes Edelstahlrohr 21, 22 bzw. 23 im Querschnitt von der Kreisform abweichend ausgebildet, beispielsweise rechteckförmig.

Ein jedes Edelstahlrohr 21, 22, 23 ist von einem Induktor umgeben, zumindest teilweise. Dabei ist der Induktor 24 dem Edelstahlrohr 21, der Induktor 25 dem Edelstahlrohr 22 und der Induktor 26 dem Edelstahlrohr 23 zugeordnet.

Die Edelstahlrohre 21, 22 und 23 sind zur Ausbildung eines gemeinsamen Härteraums miteinander verbunden, zu welchem Zweck entsprechende Muffen 27 bzw. 28 vorgesehen sind. Dabei verbindet die Muffe 27 die Edelstahlrohre 21 und 22 und die Muffe 28 die Edelstahlrohre 22 und 23.

Die von den Heizstrecken 18, 19 und 20 insgesamt bereitgestellte Härtekammer ist strömungstechnisch an ein Stickstoffreservoire 29 angeschlossen, zu welchem Zweck eine entsprechende Stickstoffleitung 30 das Stickstoffreservoire 29 mit dem Härteraum verbindet. Im bestimmungsgemäßen Verwendungsfall kann der Härteraum so mit Stickstoff geflutet werden, wodurch die darin unter Umständen vorhandene Umgebungsluft verdrängt wird.

Der Induktionsstrecke 15 folgt die Kühlstrecke 16 in Förderrichtung 13 nach. Die Kühlstrecke 16 verfügt über zwei Kühleinrichtungen 31 und 32. Diese sind jeweils als Kühltaschen ausgebildet und an einen Kühlmittelaufbereiter 33 mittels einer Zulaufleitung 34 einerseits und einer Ablaufleitung 35 andererseits angeschlossen. Als Kühlmittel kommt insbesondere Wasser zum Einsatz. Dieses wird im Kühlmittelaufbereiter 32 heruntergekühlt und alsdann über die Zulaufleitung 34 den Kühleinrichtungen 31 und 32 zugeführt. In einem geschlossenen Strömungskreislauf wird das Wasser alsdann über die Ablaufleitung 35 zurück zum Kühlmittelaufbereiter 33 geführt.

Die beiden Kühleinrichtungen 31 und 32 sind unter Belassung eines Spalts beabstandet voneinander angeordnet. Durch diesen Spalt hindurch wird im bestimmungsgemäßen Verwendungsfall das abzukühlende und zuvor aufgewärmte Klingenrohband 12 geführt. Dabei stehen die Kühleinrichtungen 31 und 32 vorzugsweise in Berührungskontakt mit der jeweils zugewandten Seite des Klingenrohbandes 12. Die klingenrohbandseitigen Kontaktoberflächen 36 und 37 der Kühleinrichtung 31 bzw. 32 sind vorzugsweise geraut ausgebildet. Besonders bevorzugt ist es in diesem Zusammenhang, dass die Kontaktoberflächen 36 und 37 jeweils mit Riefen ausgerüstet sind. Dies erbringt den vorteilhaften Effekt, dass das an den Kontaktoberflächen 36 und 37 vorbeigefügte Klingenrohband 12 abgestriffen wird, was eine Säuberung und Glättung desselben bewirkt.

Die Anlassstrecke 17 verfügt gleichfalls über ein Wärmeübertragungsmittel in der Ausgestaltung eines Edelstahlrohrs 38. Auch dies ist von einem Induktor 39 umgeben.

Zwecks Erwärmung des Wärmeübertragungsmittels, das heißt der Edelstahlrohre 21, 22, 23 der Induktionsstrecke 15 einerseits bzw. des Edelstahlrohres 38 der Anlassstrecke 17 andererseits wird an die jeweils zugeordneten Induktoren 24, 25, 26 bzw. 39 eine Wechselspannung angelegt, die zur Ausbildung entsprechender Wirbelströme in den zugehörigen Edelstahlrohren 21, 22, 23 und 38 führt. Über die Frequenz der Wechselspannung und die anliegende Stromstärke kann eine gezielte Erwärmung eines zugehörigen Edelstahlrohres 21, 22, 23 bzw. 38 auf die gewünschte Endtemperatur erreicht werden. Das durch die Edelstahlrohre 21, 22, 23 bzw. 38 jeweils hindurchgeführte Klingenrohband 12 wird infolgedessen indirekt induktiv erwärmt. In Kombination von Induktionsstrecke 15 und Kühlstrecke 16 steht so in erfindungsgemäßer Weise ein indirektes Induktionshärten des Klingenrohbandes 12.

**Bezugszeichen**

| | | | |
|---|---|---|---|
| 1 | Stahlband | 21 | Edelstahlrohr |
| 2 | erster Bearbeitungsprozess | 22 | Edelstahlrohr |
| 3 | Klingenrohband | 23 | Edelstahlrohr |
| 4 | zweiter Bearbeitungsprozess | 24 | Induktor |
| 5 | gehärtes Klingenrohband | 25 | Induktor |
| 6 | dritter Bearbeitungsprozess | 26 | Induktor |
| 7 | Klingenband | 27 | Muffe |
| 8 | vierter Bearbeitungsprozess | 28 | Muffe |
| 9 | Klinge | 29 | Stickstoffreservoir |
| 10 | Vorrichtung | 30 | Leitung |
| 11 | Abwickelhaspel | 31 | Kühleinrichtung |
| 12 | Klingenrohband | 32 | Kühleinrichtung |
| 13 | Förderrichtung | 33 | Kühlmittelaufbereiter |
| 14 | Aufwickelhaspel | 34 | Zulaufleitung |
| 15 | Induktionsstrecke | 35 | Ablaufleitung |
| 16 | Kühlstrecke | 36 | Kontaktfläche |
| 17 | Anlassstrecke | 37 | Kontaktfläche |
| 18 | erste Heizstrecke | 38 | Edelstahlrohr |
| 19 | zweite Heizstrecke | 39 | Induktor |
| 20 | dritte Heizstrecke | 40 | gehärtetes Klingenrohband |

## Patentansprüche

1. Verfahren zum Herstellen einer Klinge, insbesondere einer Klinge für einen Hornhauthobel, einen Rasierhobel und/oder dergleichen Hobel,
bei dem aus einem Stahlband (1) durch Stanzen ein Klingenrohband (3) hergestellt wird, wobei das Klingenrohband (3) eine Vielzahl von in Längsrichtung des Klingenrohbandes (3) hintereinander angeordneten Klingenabschnitten bereitstellt,
bei dem das Klingenrohband (3) gehärtet wird,
bei dem das gehärte Klingenrohband (5) entlang seiner beiden Längsseiten geschliffen wird, und
bei dem durch Vereinzelung der Klingenabschnitte Klingen (9) ausgebildet werden,
**dadurch gekennzeichnet,**
**dass** der Verfahrensschritt des Härtens mittels indirektem Induktionshärten durchgeführt wird.

2. Verfahren nach Anspruch 1, **dadurch gekennzeichnet, dass** der Verfahrensschritt des Härtens durchgeführt wird, indem das Klingenrohband (3) durch einen von einem Wärmeübertragungsmittel bereitgestellt Härteraum hindurchgeführt wird, wobei das Wärmeübertragungsmittel induktiv erwärmt wird.

3. Verfahren nach Anspruch 2, **dadurch gekennzeichnet, dass** der Härteraum mit Stickstoff geflutet wird.

4. Verfahren nach einem der vorhergehenden Ansprüche 1 bis 3, **dadurch gekennzeichnet, dass** der Verfahrensschritt des Härtens ferner umfasst, dass einem Erwärmen des Klingenrohbandes (3) unmittelbar nachfolgend ein Abkühlen des Klingenbandes (3) durchgeführt wird.

5. Verfahren nach Anspruch 4, **dadurch gekennzeichnet, dass** der Verfahrensschritt des Kühlens durchgeführt wird, indem das Klingenrohband (3) durch einen zwischen zwei beabstandet zueinander angeordneten Kühleinrichtungen (31, 32) ausgebildeten Spaltraum hindurchgeführt wird, wobei die Kühleinrichtungen (31, 32) jeweils klingenrohbandseitig eine Riefen aufweisende Kontaktoberfläche (36, 37) bereitstellen, an denen das Klingenrohband (3) unter jeweiliger Ausbildung eines Berührungskontakts vorbeigeführt wird.

6. Verfahren nach einem der vorhergehenden Ansprüche, **dadurch gekennzeichnet, dass** der Verfahrensschritt des Härtens kontinuierlich durchgeführt wird.

7. Vorrichtung zum Härten eines aus Stahl gebildeten Klingenrohbandes (3), das eine Vielzahl von in Längsrichtung hintereinander angeordneten Klingenabschnitten bereitstellt, mit einer Heizstrecke (18), die ein Wärmeübertragungsmittel aufweist, das einen Härteraum zum kontinuierlichen Hindurchführen des Klingenrohbandes (3) aufweist, wobei die Heizstrecke (18) ferner einen das Wärmeübertragungsmittel zumindest teilweise umgebenden Induktor (24) zur induktiven Erwärmung des Wärmeübertragungsmittels aufweist.

8. Vorrichtung nach Anspruch 7, **gekennzeichnet durch** eine Kühlstrecke (16), die zwei taschenförmig ausgebildete Kühleinrichtungen (31, 32) aufweist, die unter Ausbildung eines Spaltraums zum kontinuierlichen Hindurchführen des Klingenrohbandes (3) beabstandet zueinander angeordnet sind.

9. Vorrichtung nach Anspruch 8, **dadurch gekennzeichnet, dass** die Kühleinrichtungen (31, 32) jeweils klingenrohbandseitig eine mit Riefen ausgerüstete Kontaktoberfläche (36, 37) aufweist.

10. Vorrichtung nach einem der vorhergehenden Ansprüche 7 bis 9, **dadurch gekennzeichnet, dass** das Wärmeübertragungsmittel ein Edelstahlrohr (21) ist.

## Geänderte Patentansprüche

### Geänderte Patentansprüche gemäss Regel 137(2) EPÜ.

1. Verfahren zum Herstellen einer Klinge, insbesondere einer Klinge für einen Hornhauthobel, einen Rasierhobel und/oder dergleichen Hobel,
bei dem aus einem Stahlband (1) durch Stanzen ein Klingenrohband (3) hergestellt wird, wobei das Klingenrohband (3) eine Vielzahl von in Längsrichtung des Klingenrohbandes (3) hintereinander angeordneten Klingenabschnitten bereitstellt,
bei dem das Klingenrohband (3) gehärtet wird,
bei dem das gehärte Klingenrohband (5) entlang seiner beiden Längsseiten geschliffen wird, und
bei dem durch Vereinzelung der Klingenabschnitte Klingen (9) ausgebildet werden,
**dadurch gekennzeichnet,**
**dass** der Verfahrensschritt des Härtens mittels indirektem Induktionshärten durchgeführt wird, indem das Klingenrohband (3) durch einen von einem als Wärmeübertragungsmittel dienenden Rohr bereitgestellten Härteraum hindurchgeführt wird, wobei das Rohr induktiv erwärmt wird und die so erzeugte Wärme durch Konvektion und Strahlung an das durch den Härteraum hindurchgeführte Klingenrohband (3) übertragen wird, wobei der Verfahrensschritt des Härtens ferner umfasst, dass einem Erwärmen des Klingenrohbandes (3) unmittelbar nachfolgend ein Abkühlen des Klingenrohbandes (3) durchgeführt wird, . indem das Klingenrohband (3) durch einen zwischen zwei beabstandet zueinander angeordneten Kühleinrichtungen (31, 32) ausgebildeten Spaltraum hindurchgeführt wird, wobei die Kühleinrichtungen (31, 32) jeweils klingenrohbandseitig eine Riefen aufweisende Kontaktoberfläche (36, 37) bereitstellen, an denen das Klingenrohband (3) unter jeweiliger Ausbildung eines Berührungskontakts vorbeigeführt wird, wobei der Verfahrensschritt des Härtens kontinuierlich durchgeführt wird.

2. Verfahren nach Anspruch 1, **dadurch gekennzeichnet, dass** der Härteraum mit Stickstoff geflutet wird.

3. Verfahren nach Anspruch 1 oder 2, **dadurch gekennzeichnet, dass** ein Stahlband (1) mit einer Dicke von 0,05 mm bis 1,0 mm verwendet wird.

4. Verfahren nach einem der vorhergehenden Ansprüche, **dadurch gekennzeichnet, dass** eine Durch härtung des Stahlbandes (1) stattfindet, wobei eine Härtung von 63 bis 67 Rockwell erreicht wird.

5. Verfahren nach einem der vorhergehenden Ansprüche, **dadurch gekennzeichnet, dass** die Vereinzelung der Klingenabschnitte durch Brechen erfolgt.

6. Verfahren nach einem der vorhergehenden Ansprüche, **dadurch gekennzeichnet, dass** das Rohr auf eine Temperatur von 750° C bis 950° C erwärmt wird.

7. Verfahren nach einem der vorhergehenden Ansprüche, **dadurch gekennzeichnet, dass** dem Verfahrensschritt des Abkühlens unmittelbar nachfolgend ein Anlassen des gehärteten Klingenrohbandes (5) durchgeführt wird, wobei das Anlassen durch ein indirektes Erwärmen durch Induktion erfolgt.

8. Vorrichtung zum Härten eines aus Stahl gebildeten Klingenrohbandes (3), das eine Vielzahl von in Längsrichtung hintereinander angeordneten Klingenabschnitten bereitstellt, mit einer Heizstrecke (18), die ein als Wärmeübertragungsmittel dienendes Rohr aufweist, das einen Härteraum zum kontinuierlichen Hindurchführen des Klingenrohbandes (3) aufweist, wobei die Heizstrecke (18) ferner einen das Rohr zumindest teilweise umgebenden Induktor (24) zur induktiven Erwärmung des Rohrs aufweist, und mit einer Kühlstrecke (16), die zwei taschenförmig ausgebildete Kühleinrichtungen (31, 32) aufweist, die unter Ausbildung eines Spaltraums zum kontinuierlichen Hindurchführen des Klingenrohbandes (3) beabstandet zueinander angeordnet sind, wobei die Kühleinrichtungen (31, 32) jeweils klingenrohbandseitig eine mit Riefen ausgerüstete Kontaktoberfläche (36, 37) aufweist.

9. Vorrichtung nach Anspruch 8, **dadurch gekennzeichnet, dass** das Rohr ein Edelstahlrohr (21) ist.

10. Vorrichtung nach Anspruch 8 oder 9, **dadurch gekennzeichnet, dass** zwei weitere Heizstrecken (19, 20) vorgesehen sind, wobei die Heizstrecken (18, 19, 20) in Förderrichtung (13) des Klingenrohbandes hintereinander angeordnet sind.

11. Vorrichtung nach Anspruch 10, **dadurch gekennzeichnet, dass** jede Heizstrecke (18, 19, 20) jeweils über ein als Wärmeübertragungsmittel dienendes Rohr (21, 22, 23) verfügt, wobei zur Verbindung der Rohre (21, 22, 23) Muffen (27, 28) vorgesehen sind.
